# EUROPEAN PATENT SPECIFICATION

(11) **EP 2 908 062 B1**
(45) Date of publication and mention of the grant of the patent: **17.07.2019**
(21) Application number: 15152965.8
(22) Date of filing: 29.01.2015
(51) Int. Cl.: F24F 1/10, F24F 1/46, F24F 1/56

(54) **Outdoor Unit of Air Conditioner**
Außeneinheit einer Klimaanlage
Unité extérieure pour climatiseur

(30) Priority: 14.02.2014 JP 2014026753
(43) Date of publication of application: 19.08.2015
(73) Proprietor: Panasonic Intellectual Property Management Co., Ltd., Osaka-shi, Osaka 540-6207 (JP)
(72) Inventor: Matsui, Masaru, Osaka-shi, Osaka 540-6207 (JP); Nishiyama, Yoshitsugu, Osaka-shi, Osaka 540-6207 (JP); Masuda, Tetsuya, Osaka-shi, Osaka 540-6207 (JP); Nagai, Masaaki, Osaka-shi, Osaka 540-6207 (JP)
(74) Representative: Grünecker Patent- und Rechtsanwälte PartG mbB

(56) References cited:
- WO-A1-2013/046725
- JP-A- 2003 056 931
- JP-A- 2009 068 750
- JP-A- 2012 242 022
- US-A1- 2012 218 731

## Description

### BACKGROUND

### 1. Technical Field

The present disclosure relates to an outdoor unit of an air conditioner including a non-power-supply driving compressor and a power-supply driving compressor, the non-power-supply driving compressor being driven by an engine and the power-supply driving compressor being driven by electric power.

### 2. Description of the Related Art

The operation efficiency of a gas heat pump as an air conditioner is reduced due to a reduction in the thermal efficiency of a gas engine when a partial load is applied. In order to prevent this, what is called a hybrid outdoor unit including a power-supply driving compressor and a non-power-supply driving compressor is proposed (refer to, for example, Japanese Unexamined Patent Application Publication No. 2003-56931). In the hybrid outdoor unit, the power-supply driving compressor having a displacement that is smaller than the displacement of the non-power-supply driving compressor that is driven by the gas engine is provided. When a partial load is applied, the power-supply driving compressor is primarily operated, whereas, when a high load is applied, the gas engine is primarily operated.

In hybrid outdoor units, the displacement of the non-power-supply driving compressor that is driven by the gas engine is larger than the displacement of the power-supply driving compressor, and components which are characteristic of gas heat pumps and which are not installed in electric heat pumps (such as exhaust mufflers and cooling water pumps) need to be installed.

Therefore, when the hybrid outdoor unit in Japanese Unexamined Patent Application Publication No. 2003-56931 is formed, it is desirable to add and dispose the power-supply driving compressor in the outdoor unit of the gas heat pump with the outdoor unit serving as a base.

In existing gas heat pumps, the inside of a body housing is divided into two portions, that is, an upper portion and a lower portion, by a partition plate (refer to, for example, Japanese Unexamined Patent Application Publication No. 2009-68750).

A first floor is a machine room. Many components are installed on the first floor. They are, for example, a gas engine, a non-power-supply driving compressor that is driven by the gas engine, an oil separator that separates refrigeration oil from discharge gas of the non-power-supply driving compressor, an exhaust muffler of the gas engine, a cooling water pump that circulates cooling water of the gas engine, and a control board.

A second floor is a heat exchanger room. An air blower including a fan and an orifice is provided at an upper surface of a heat exchanger room. By rotating the fan, the pressure in the heat exchanger room becomes negative, and air is taken in from an outer peripheral portion of an air heat exchanger. Air that has been subjected to heat exchange with a refrigerant at the air heat exchanger passes through the inside of the heat exchanger room and is discharged to the upper side of the housing from the orifice.

### SUMMARY

However, regarding such existing hybrid outdoor units, the layout of the non-power-supply driving compressor or the layout of the power-supply driving compressor inside of the body housing is not taken into consideration. When the power-supply driving compressor is disposed in the machine room (first floor) as with other components, an existing component layout needs to be considerably changed because there is not enough space in the machine room (first floor).

One non-limiting and exemplary embodiment provides an outdoor unit of an air conditioner in which both a non-power-supply driving compressor that is driven by an engine and a power-supply driving compressor that is driven by a motor are disposed, and the outdoor unit allowing the power-supply driving compressor to be easily added and disposed without changing the layout of the inside of an outdoor unit of an existing gas heat pump, with the non-power-supply driving compressor.

In one general aspect, the techniques disclosed here feature an outdoor unit of an air conditioner includes a power-supply driving compressor and a non-power-supply driving compressor that are connected in parallel, the power-supply driving compressor being driven by an electric power, the non-power-supply driving compressor being driven by a driving source other than the electric power, and a body housing divided into an upper portion and a lower portion by a partition plate. In the outdoor unit, a heat exchanger room is provided at the upper portion, and a machine room is provided at the lower potion, and the power-supply driving compressor is provided at the heat exchanger room, and the non-power-supply driving compressor is provided at the machine room.

In the outdoor unit of an air conditioner according to the one general aspect, the power-supply driving compressor is provided in the heat exchanger room (second floor). Therefore, when the power-supply driving compressor is added and disposed inside of the outdoor unit of the existing gas heat pump, the layout of the machine room at the outdoor unit does not need to be changed. Consequently, it is possible to use as they are, for example, power-supply/signal lines that connect a control board and various actuators of, for example, an electromagnetic valve, an expansion valve, a non-power-supply driving compressor, a gas engine, and refrigerant pipes component of the existing gas heat pump. Thus, it is possible to reduce development period and manufacturing costs.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

### BRIEF DESCRIPTION OF THE DRAWINGS

Fig. 1 shows a structure for a refrigeration cycle of an air conditioner according to an exemplary embodiment of the present disclosure;
Fig. 2 is a vertical cross-sectional view of an outdoor unit according to a first exemplary embodiment of the present disclosure;
Fig. 3 is a transverse cross-sectional view of the outdoor unit according to the first exemplary embodiment of the present disclosure;
Fig. 4 is a vertical cross-sectional view of an outdoor unit according to a second exemplary embodiment of the present disclosure;
Fig. 5 is a transverse cross-sectional view of the outdoor unit according to the second exemplary embodiment of the present disclosure;
Fig. 6 is a vertical cross-sectional view of an outdoor unit according to a third exemplary embodiment of the present disclosure;
Fig. 7 is a transverse cross-sectional view of the outdoor unit according to the first exemplary embodiment of the present disclosure;

### DETAILED DESCRIPTION

According to a first aspect of the present disclosure, there is provided an outdoor unit of an air conditioner includes a power-supply driving compressor and a non-power-supply driving compressor that are connected in parallel, the power-supply driving compressor being driven by an electric power, the non-power-supply driving compressor being driven by a driving source other than the electric power, and a body housing divided into an upper portion and a lower portion by a partition plate. In the outdoor unit, a heat exchanger room is provided at the upper portion, and a machine room is provided at the lower potion, and the power-supply driving compressor is provided at the heat exchanger room, and the non-power-supply driving compressor is provided at the machine room.

Accordingly, when the power-supply driving compressor is added and disposed inside of an outdoor unit of an existing gas heat pump, the layout of a machine room at the outdoor unit does not need to be changed. Therefore, it is possible to use as they are, for example, power-supply/signal lines that connect a control board and various actuators of, for example, an electromagnetic valve, an expansion valve, a non-power-supply driving compressor, a gas engine, and a refrigerant pipe component of the existing gas heat pump. Thus, it is possible to reduce development period and reduce manufacturing costs.

According to a second aspect of the present disclosure, in the outdoor unit of an air conditioner according to the first aspect, the power-supply driving compressor is provided at a substantially central portion of a floor surface of the heat exchanger room.

Accordingly, a change in a horizontal center-of-gravity position of the outdoor unit of the existing gas heat pump caused by the addition of the power-supply driving compressor is small. Therefore, in the present disclosure, in addition to providing the advantages of the first aspect, the outdoor unit can be transported with substantially the same weight balance as the outdoor unit of the existing gas heat pump, as a result of which a contractor that sets the outdoor unit is not excessively burdened when transporting the outdoor unit.

According to a third aspect of the present disclosure, in the outdoor unit of an air conditioner according to the second aspect, at least one vent hole is provided in the partition plate around the power-supply driving compressor. The vent hole allows air in the outdoor unit to move between the heat exchanger room and the machine room.

Accordingly, the vent hole that allows air in the outdoor unit to move between the heat exchanger room and the machine room is provided with the power-supply driving compressor being provided at a substantially central portion of the floor surface of the heat exchanger room (second floor). Therefore, in addition to providing the advantages of the first and second aspects, the present disclosure makes it possible to provide a ventilation path for allowing exhaust heat of the gas engine in the machine room (first floor) to be discharged to the outside of the body housing via the heat exchanger room.

According to a fourth aspect of the present disclosure, in the outdoor unit of an air conditioner according to any one of the first to third aspects, a ventilation resistance of the vent hole during the non-operation of the non-power-supply driving compressor is larger than a ventilation resistance of the vent hole during the operation of the non-power-supply driving compressor.

Accordingly, when only the power-supply driving compressor is operating (the non-power-supply driving compressor is not operating) and there is no exhaust heat from the gas engine, the amount of air that moves from the machine room (first floor) to the heat exchanger room (second floor) is reduced. Therefore, in addition to providing the advantages of the first to third aspects, the present disclosure makes it possible to, when only the power-supply driving compressor is operating, increase the airflow through the heat exchanger and to increase the operation efficiency of the air conditioner.

According to a fifth aspect of the present disclosure, the outdoor unit of an air conditioner according to any one of the first to fourth aspects further includes a non-power-supply-driving-compressor oil separator that separates refrigeration oil from a refrigerant discharged by the non-power-supply driving compressor, and a power-supply-driving-compressor oil separator that separates refrigeration oil from a refrigerant discharged by the power-supply driving compressor. In the outdoor unit, a flow path resistance of a pipe that allows the refrigeration oil to flow from the non-power-supply-driving-compressor oil separator to the non-power-supply driving compressor is smaller than a flow path resistance of a pipe that allows the refrigeration oil to flow from the power-supply-driving-compressor oil separator to the power-supply driving compressor.

Accordingly, the amount of refrigeration oil that returns to the non-power-supply driving compressor from the non-power-supply-driving compressor oil separator is larger than the amount of refrigeration oil that returns to the power-supply driving compressor from the power-supply-driving-compressor oil separator. Therefore, in addition to providing the advantages of the first to fourth aspects, the present disclosure makes it possible to increase the reliability of the operation of the non-power-supply driving compressor.

According to a sixth aspect of the present disclosure, in the outdoor unit of an air conditioner according to any one of the first to fifth aspects, the non-power-supply-driving-compressor oil separator is provided at the heat exchanger room.

Accordingly, since the non-power-supply-driving-compressor oil separator is provided in the heat exchanger room (second floor), which is disposed at a higher location than the non-power-supply driving compressor in the machine room (first floor), a head difference occurs between the oil level of the non-power-supply-driving-compressor oil separator and the oil level of the non-power-supply driving compressor. Therefore, in addition to providing the advantages of the first to fourth aspects, the present disclosure makes it possible to return a larger amount of refrigeration oil from the non-power-supply-driving compressor oil separator to the non-power-supply driving compressor than to the power-supply driving compressor having a small head difference, and to increase the reliability of the operation of the non-power-supply driving compressor than in the fifth aspect.

According to a seventh aspect of the present disclosure, in the outdoor unit of an air conditioner according to any one of the first to sixth aspects, refrigeration oil of the power-supply driving compressor and refrigeration oil of the non-power-supply driving compressor are the same.

Accordingly, the refrigeration oil of the power-supply driving compressor and the refrigeration oil of the non-power-supply driving compressor do not need to be made separate. Therefore, in addition to providing the advantages of the first to sixth aspects, the present disclosure makes it possible to make common the non-power-supply-driving-compressor oil separator and the power-supply driving-compressor oil separator, and to reduce manufacturing costs of the outdoor unit.

According to an eighth aspect of the present disclosure, in the outdoor unit of an air conditioner according to any one of the first to seventh aspects, an displacement of the non-power-supply driving compressor is larger than an displacement of the power-supply driving compressor.

In general, when a low load is applied, the operation efficiency of the power-supply driving compressor is higher than that of the non-power-supply driving compressor. By causing the displacement of the non-power-supply driving compressor to be larger than the displacement of the power-supply driving compressor, for example, in the case of a low load (which only allows intermittent air-conditioning operations when only the non-power-supply driving compressor is used), only the efficient power-supply driving compressor is operated; whereas, in the case of an intermediate load to a high load, the power-supply driving compressor and the non-power-supply driving compressor are both operated so that the load is most efficiently shared. Therefore, in addition to providing the advantages of the first to seventh aspects, the present disclosure makes it possible to increase the operation efficiency of the outdoor unit as a whole.

According to a ninth aspect of the present disclosure, in the outdoor unit of an air conditioner according to any one of the first to eighth aspects, an inside diameter of each of a discharge pipe and a suction pipe at the non-power-supply driving compressor is larger than an inside diameter of each of a discharge pipe and a suction pipe at the power-supply driving compressor.

Accordingly, by increasing the displacement and increasing the inside diameter of each of the discharge pipe and the suction pipe at the non-power-supply driving compressor having a large displacement and a large refrigerant flow amount, an increase in pressure loss in the discharge pipe and the suction pipe at the non-power-supply driving compressor is reduced and the amount of refrigeration oil that returns to the non-power-supply driving compressor from a refrigeration cycle becomes larger than the amount of refrigeration oil that returns to the power-supply driving compressor. Therefore, in addition to providing the advantages of the first to eighth aspects, the present disclosure makes it possible to prevent a reduction in the operation efficiency of the outdoor unit as a whole and to increase the reliability of the operation of the non-power-supply driving compressor.

In the above-described cases, it is possible to provide an air-conditioning system including a first air-conditioning unit (such as an air-conditioning unit that includes a non-power-supply driving compressor and in which, for example, indoor and outdoor heat exchangers are connected using refrigerant pipes); at least one second air-conditioning unit (such as an air-conditioning unit that includes a power-supply driving compressor and in which, for example, indoor and outdoor heat exchangers are connected using refrigerant pipes) that air-conditions the same air-conditioning space as the first air-conditioning unit and that has a higher capacity than the first air-conditioning unit; and a controller that controls the first air-conditioning unit and the second air-conditioning unit so that energy consumption is minimized in accordance with an air-conditioning load of the air-conditioning space.

In general, the smaller the rated capacity of an air-conditioning unit, the smaller a lower-limit value (minimum capacity) that allows an air-conditioning load to be handled, and the higher the efficiency. Therefore, even if the air-conditioning load is low, when an air-conditioning unit having a low rated capacity is operated, it is possible to handle the air-conditioning load with high efficiency, and to minimize energy consumption of the air-conditioning system.

Such an air-conditioning system may be composed as follows. That is, in the air-conditioning system, when the air-conditioning load of the air-conditioning space is less than a minimum capacity of the first air-conditioning unit, the controller operates only the second air-conditioning unit. When the air-conditioning load of the air-conditioning space is greater than or equal to the minimum capacity of the first air-conditioning unit and is less than the sum of the minimum capacity of the first air-conditioning unit and a minimum capacity of the second air-conditioning unit, the controller arbitrarily selects and operates either the first air-conditioning unit or the second air-conditioning unit, that is, the non-power-supply driving compressor (provided at the first air-conditioning unit) or the power-supply driving compressor (provided at the second air-conditioning unit) whose operation costs or energy consumption is lower. When the air-conditioning load of the air-conditioning space is greater than or equal to the sum of the minimum capacity of the first air-conditioning unit and the minimum capacity of the second air-conditioning unit, the controller operates both of the first air-conditioning unit and the second air-conditioning unit.

In this structure, when the air-conditioning load is greater than or equal to the minimum capacity of the first-conditioning unit and less than the sum of the minimum capacity of the first air-conditioning unit and the minimum capacity of the second air-conditioning unit, if energy consumption when the first air-conditioning unit is singly operated is less than energy consumption when the second air-conditioning unit is singly operated, only the first air-conditioning unit is operated. In contrast, if energy consumption when the second air-conditioning unit is singly operated is less than energy consumption when the first air-conditioning unit is singly operated, only the second air-conditioning unit is operated. Therefore, even when the air-conditioning load is greater than or equal to the minimum capacity of the first air-conditioning unit and less than the sum of the minimum capacity of the first air-conditioning unit and the minimum capacity of the second air-conditioning unit, it is possible to minimize energy consumption of the air-conditioning system.

Such air-conditioning systems may be composed as follows. That is, in such air-conditioning systems, when the first air-conditioning unit and the second air-conditioning unit are both operated, the controller performs control so that the proportion of the air-conditioning load of the first air-conditioning unit with respect to the entire air-conditioning load of the air-conditioning space is ±10% of a value equal to a maximum capacity of the first air-conditioning unit divided by the total capacity corresponding to the sum of the maximum capacity of the first air-conditioning unit and a maximum capacity of the second air-conditioning unit, and so that the remaining air-conditioning load is received by the second air-conditioning unit.

In this structure, when the first air-conditioning unit and the second air-conditioning unit are both operated, the ratio between the air-conditioning load of the first air-conditioning unit and that of the second air-conditioning unit is close to the ratio between the maximum capacity of the first air-conditioning unit and the maximum capacity of the second air-conditioning unit. Therefore, when the air-conditioning load of the first air-conditioning unit and an air-conditioning load of the second air-conditioning unit are shared such that they are in accordance with the capacity, it is possible to reduce the energy consumption of the air-conditioning system.

Such air-conditioning systems may be composed as follows. That is, in such air-conditioning systems, when the first air-conditioning unit and the second air-conditioning unit are both operated, the controller determines, using the relationship between the energy consumption and the air-conditioning load at the first air-conditioning unit and the relationship between the energy consumption and the air-conditioning load at the second air-conditioning unit, the air-conditioning load of the first air-conditioning unit and the air-conditioning load of the second air-conditioning unit with respect to the entire air-conditioning load of the air-conditioning space so that the sum of the energy consumption of the first air-conditioning unit and the energy consumption of the second air-conditioning unit is minimized.

In this structure, when the first air-conditioning unit and the second air-conditioning unit are both operated, using the relationship between the energy consumption and the air-conditioning load at each air-conditioning unit, the air-conditioning load of the first air-conditioning unit is set so that the sum of the energy consumption of the first air-conditioning unit and the energy consumption of the second air-condition unit is minimized. Therefore, even when the first air-conditioning unit and the second air-conditioning unit are both operated, it is possible to minimize the energy consumption of the air-conditioning system.

Such air-conditioning systems may be composed as follows. That is, in such air-conditioning systems, the first air-conditioning unit may be driven using a driving source other than a commercial power supply. In this structure, contract power for the first air-conditioning unit is kept low without using a commercial power supply. Therefore, it is possible to reduce power consumption, set the contract power low, and reduce operation costs.

Such air-conditioning systems may be composed as follows. That is, in such air-conditioning systems, the first air-conditioning unit and the second air-conditioning unit are controlled so that the operation costs, instead of the energy consumption, are minimized. In this structure, it is possible to reduce the operation costs by performing the control operation described above.

Embodiments of the present disclosure are described below with reference to the drawings. Note that the present disclosure is not limited to the embodiments.

### First Exemplary Embodiment

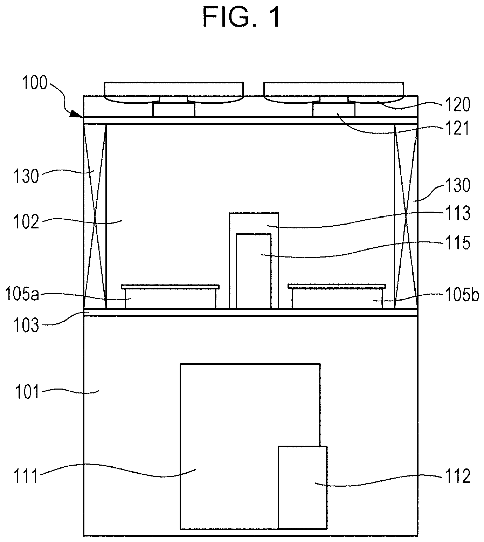

A structure for a refrigeration cycle of an air conditioner according to a first exemplary embodiment is shown in Fig. 1. The air conditioner shown in Fig. 1 has what is called a twin structure in which two indoor units are connected to one outdoor unit. The refrigeration cycle structure is not limited to that shown in Fig. 1. For example, two or more outdoor units and three or more indoor units may be connected in parallel.

Reference numeral 100 denotes an outdoor unit. The outdoor unit 100 is connected to indoor units 200 and 210 via a gas pipe 55 and a liquid pipe 50 in which a refrigerant flows. In the outdoor unit 100, reference numeral 111 denotes an engine, reference numeral 112 denotes an engine driving compressor (non-power-supply driving compressor), and reference numeral 113 denotes a power-supply driving compressor. The engine 111 uses other than an electric power source, for example, gas as a driving source. The engine driving compressor 112 receives driving force from the engine 111 and compresses a refrigerant. The power-supply driving compressor 113 includes a built-in motor and is driven by an electric power, such as a commercial power supply. The engine driving compressor 112 and the power-supply driving compressor 113 are connected in parallel in the refrigeration cycle. The displacement of the engine driving compressor 112 is greater than the displacement of the power-supply driving compressor 113. For a lubricant of the engine driving compressor 112 and that of the power-supply driving compressor 113, the same refrigeration oil is used.

A discharge pipe and a suction pipe at the engine driving compressor 112 are thicker than a discharge pipe and a suction pipe at the power-supply driving compressor 113. This reduces an increase in pressure loss at the discharge pipe and the suction pipe at the engine driving compressor 112 having a large refrigerant flow amount, and causes the amount of refrigeration oil returning to the engine driving compressor 112 from the refrigeration cycle to be larger than the amount of refrigeration oil returning to the power-supply driving compressor 113.

Reference numeral 114 denotes an accumulator. The accumulator 114 is connected to a refrigerant pipe extending from a four-way valve 116 (described later) to a meeting point of the suction pipe at the engine driving compressor 112 and the suction pipe at the power-supply driving compressor 113. The accumulator 114 supplies a gas refrigerant to both compressors.

Reference numeral 115 denotes an oil separator. The oil separator 115 is disposed at a refrigerant pipe extending from the four-way valve 116 (described later) to a meeting point of the discharge pipe at the engine driving compressor 112 and the discharge pipe at the power-supply driving compressor 113. The oil separator 115 separates refrigeration oils contained in discharge gases of both compressors all at once. The refrigeration oils separated by the oil separator 115 from the discharge gases are returned to the suction pipe at the engine driving compressor 112 via an oil return tube 115a, and to the suction pipe at the power-supply driving compressor 113 via an oil return tube 115c, so that the refrigeration oils are separately returned to the compressors. An oil-return-tube on-off valve 115b is provided at the oil return tube 115a, and an oil-return-tube on-off valve 115d is provided at the oil return tube 115c.

An oil separator 115 may be individually provided at each compressor. When oil separators 115 are individually provided, one oil separator 115 is provided at the discharge pipe at the engine driving compressor 112, and one oil separator 115 is provided at the discharge pipe at the power-supply driving compressor 113.

Reference numeral 116 denotes the four-way valve that switches the refrigeration cycle between cooling and heating. Reference numeral 117 denotes an outdoor-unit pressure reducing device that causes a refrigerant to expand. Reference numeral 118 denotes an engine exhaust-heat heat exchanger that causes heat exchange to be performed between a refrigerant and high-temperature cooling water used in cooling the engine 111. The engine exhaust-heat heat exchanger 118 is used during the heating. A cooling-water pipe (not shown) is provided at the engine exhaust-heat heat exchanger 118.

Reference numeral 119 denotes a refrigerant-flow-amount adjusting valve that is provided for the engine exhaust-heat heat exchanger 118 and that adjusts the flow amount of a refrigerant that flows into the engine exhaust-heat heat exchanger 118. Reference numeral 120 denotes an outdoor blower fan that supplies air around the outdoor unit 100 to an outdoor-unit heat exchanger 130.

In the indoor unit 200, reference numeral 201 denotes an indoor air heat exchanger, reference numeral 202 denotes an indoor blower fan that supplies air around the indoor unit 200 to the indoor air heat exchanger 201, and reference numeral 203 denotes an indoor-unit pressure reducing device that causes a refrigerant to expand.

Similarly, in the indoor unit 210, reference numeral 211 denotes an indoor air heat exchanger, reference numeral 212 denotes an indoor blower fan that supplies air around the indoor unit 210 to the indoor air heat exchanger 211, and reference numeral 213 denotes an indoor-unit pressure reducing device that causes a refrigerant to expand.

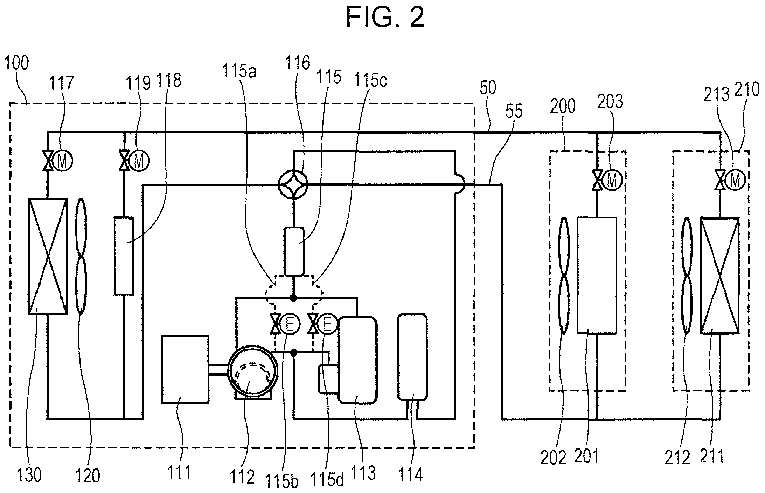

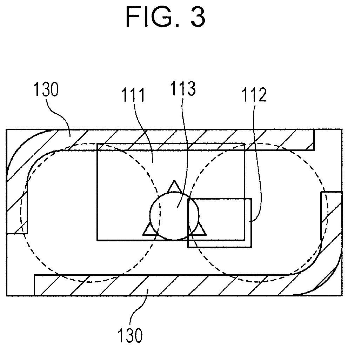

Next, an internal structure of the outdoor unit 100 of the air conditioner according to the exemplary embodiment is shown in Figs. 2 and 3. Fig. 2 is a vertical sectional view of the outdoor unit 100 that is sectioned by a vertical plane that is parallel to a front plane. Fig. 3 is a horizontal sectional view of the outdoor unit 100 that is sectioned by a horizontal plane that is parallel to a bottom plane.

As shown in Fig. 2, the outdoor unit 100 includes a body housing 100A that includes a frame. The inside of the body housing 100A is divided into two portions, that is, an upper portion and a lower portion, by a partition plate 103. Reference numeral 101 denotes a machine room. Reference numeral 102 denotes a heat exchanger room.

As shown in Fig. 2, the power-supply driving compressor 113 that is driven by an electric power and the engine driving compressor 112 that is driven by a driving source other than the electric power are integrally accommodated together in the body housing 100A of the outdoor unit 100.

For example, when an air-conditioning load of an air-conditioning space is less than a minimum capacity of the engine driving compressor (first air-conditioning unit) 112, only the power-supply driving compressor (second air-conditioning unit) 113 is operated. When the air-conditioning load of the air-conditioning space is greater than or equal to the minimum capacity of the engine driving compressor (first air-conditioning unit) 112 and is less than the sum of the minimum capacity of the first air-conditioning unit and a minimum capacity of the second air-conditioning unit, either the engine driving compressor (first air-conditioning unit) 112 or the power-supply driving compressor (second air-conditioning unit) 113, that is, the engine driving compressor (provided at the first air-conditioning unit) 112 or power-supply driving compressor (provided at the second air-conditioning unit) 113 whose operation costs or energy consumption is lower is arbitrarily selected and operated. When the air-conditioning load of the air-conditioning space is greater than or equal to the sum of the minimum capacity of the first air-conditioning unit and the minimum capacity of the second air-conditioning unit, both of the engine driving compressor (first air-conditioning unit) 112 and the power-supply driving compressor (second air-conditioning unit) 113 are operated.

The engine 111 and the engine driving compressor 112 are provided in the machine room 101. Although not shown in Fig. 2, the machine room 101 is provided therein with many other components, such as an accumulator 114, an oil separator 115, a four-way valve 116, an outdoor-unit pressure reducing device 117, an engine exhaust-heat heat exchanger 118, a refrigerant-flow-amount adjusting valve 119 for the engine exhaust-heat heat exchanger, an exhaust muffler for the engine 111, a cooling water pump that circulates cooling water in the engine 111, a control board, and a refrigerant pipe.

For the arrangement of these components, the arrangement of components of an existing gas heat pump may be used.

In the heat exchanger room 102, the outdoor heat exchanger 130 is composed so as to composean outside wall of the heat exchanger room 102. The power-supply driving compressor 113 is provided at a substantially central portion of the partition plate 103. The power-supply driving compressor 113 is, for example, an internally sealed rotary compressor. Since, for example, rain water enters the heat exchanger room 102, it is desirable that a rain-water protective cover (indicated by a dotted line) be disposed at the power-supply driving compressor 113. The power-supply driving compressor 113 is disposed at the center of the outdoor heat exchanger 130 and at a substantially central portion in a depth direction.

Since the power-supply driving compressor 113 is provided in the heat exchanger room 102 instead of in the machine room, the layout of the components in the machine room 101 is the same as the layout of components in the machine room of the existing gas heat pump.

Next, the operation of the outdoor unit 100 and the operations of the indoor units 200 and 210 are described.

During a cooling operation, the four-way valve 116 is provided so as to cause a refrigerant to flow along a solid line (refer to Fig. 1). A high-temperature high-pressure refrigerant compressed by the engine driving compressor 112 and a high-temperature high-pressure refrigerant compressed by the power-supply driving compressor 113 meet, and then flow into the oil separator 115. A highly pure gas refrigerant obtained by separating refrigeration oils at the oil separator 115 flows through the four-way valve 116, and enters the outdoor heat exchanger 130. The gas refrigerant is subjected to heat exchange with outside air at the outdoor heat exchanger 130 and is dissipated. Then, the dissipated gas refrigerant condenses, becomes a high-pressure liquid refrigerant, flows through the outdoor-unit pressure reducing device 117, flows through the liquid pipe 50, and is supplied to the indoor units 200 and 210.

By opening an oil-return-tube on-off valve 115b when the engine driving compressor 112 is being driven, the refrigeration oils separated by the oil separator 115 are returned to the suction pipe at the engine driving compressor 112. Similarly, by opening an oil-return-tube on-off valve 115d when the power-supply driving compressor 113 is being driven, the refrigeration oils separated by the oil separator 115 are returned to the suction pipe at the power-supply driving compressor 113. When the engine driving compressor 112 is not driven, the oil-return-tube on-off valve 115b is closed. When the power-supply driving compressor 113 is not driven, the oil-return-tube on-off valve 115d is closed.

The high-pressure liquid refrigerant that has entered the indoor unit 200 is reduced in pressure by the indoor-unit pressure reducing device 203, has its state changed to a gas-liquid two-phase state, and flows into the indoor heat exchanger 201. At the indoor heat exchanger 201, the refrigerant in the gas-liquid two-phase state is subjected to heat exchange with air in an air-conditioning space. It absorbs heat and then evaporates, becomes a gas refrigerant, and flows out from the indoor unit 200.

Even in the indoor unit 210, as in the indoor unit 200, first, the high-pressure liquid refrigerant is reduced in pressure by the indoor-unit pressure reducing device 213, has its state changed to a gas-liquid two-phase state, and flows into the indoor heat exchanger 211. At the indoor heat exchanger 211, the refrigerant in the gas-liquid two-phase state is subjected to heat exchange with air in an air-conditioning space. It absorbs heat and then evaporates, becomes a gas refrigerant, and flows out from the indoor unit 210.

When the cooling operation is performed only at the indoor unit 200, the indoor-unit pressure reducing device 213 is closed, and the refrigerant is not supplied to the indoor heat exchanger 211 of the indoor unit 210. In contrast, when the cooling operation is performed only at the indoor unit 210, the indoor-unit pressure reducing device 203 is closed, and the refrigerant is not supplied to the indoor heat exchanger 201 of the indoor unit 200.

The gas refrigerant that has flown out from the indoor units 200 and 210 flows through the gas pipe 55, and returns to the outdoor unit 100. The gas refrigerant that has flown into the outdoor unit 100 flows through the four-way valve 116 and the accumulator 114, and returns to the engine driving compressor 112 and the power-supply driving compressor 113.

A method for operating the engine driving compressor 112 and the power-supply driving compressor 113 during the cooling operation is, for example, as follows.

When a cooling load is less than a cooling capacity when the engine driving compressor 112 is operated at a minimum operation frequency (minimum cooling capacity of the engine driving compressor 112), only the engine driving compressor 112 is intermittently operated. Therefore, only the power-supply driving compressor 113 is operated.

When the cooling load is greater than a minimum cooling load of the engine driving compressor 112 and is less than a cooling capacity when the engine driving compressor 112 and the power-supply driving compressor 113 are both operated at the minimum operation frequency (minimum cooling capacity when both of the compressors are operated), either one of the engine driving compressor 112 and the power-supply driving compressor 113, such as the compressor whose operation costs or energy consumption is lower, is selected and operated.

When the cooling load is greater than the minimum cooling capacity when both of the compressors are operated, the engine driving compressor 112 and the power-supply driving compressor 113 are both operated so that, for example, operation costs or energy consumption is minimized.

In this case, in order to determine the operation frequency of each of the power-supply driving compressor 113 and the engine driving compressor 112 for minimizing the operation costs or the energy consumption, the relationship between the operation costs and the operation frequency of each compressor or the relationship between the energy consumption and the operation frequency of each compressor is utilized.

Actually, the proportion of a cooling load of the engine driving compressor 112 with respect to the entire cooling load is on the order of ±15% of the proportion of a cooling capacity when only the engine driving compressor 112 is operated at a maximum operation frequency with respect to a maximum cooling capacity when both of the compressors are operated at the maximum operation frequency (maximum cooling capacity when both of the compressors are operated).

Next, during a heating operation, the four-way valve 116 is provided so that a refrigerant flows along a dotted line (refer to Fig. 1). A high-temperature high-pressure refrigerant compressed by the engine driving compressor 112 and a high-temperature high-pressure refrigerant compressed by the power-supply driving compressor 113 meet, and then flow into the oil separator 115. A highly pure gas refrigerant obtained by separating refrigeration oils at the oil separator 115 flows through the four-way valve 116, flows out of the outdoor unit 100, flows through the gas pipe 55, and is supplied to the indoor units 200 and 210.

The high-temperature high-pressure gas refrigerant that has entered the indoor unit 200 flows into the indoor heat exchanger 201. The high-temperature high-pressure gas refrigerant is subjected to heat exchange with air in an air-conditioning space at the indoor heat exchanger 201 and is dissipated. Then, the dissipated gas refrigerant condenses, becomes a high-pressure liquid refrigerant, flows through the indoor-unit pressure reducing device 203, and flows out from the indoor unit 200.

Even in the indoor unit 210, as in the indoor unit 200, first, the high-temperature high-pressure gas refrigerant flows into the indoor heat exchanger 211. The high-temperature high-pressure gas refrigerant is subjected to heat exchange with air in an air-conditioning space at the indoor heat exchanger 211 and is dissipated. Then, the dissipated gas refrigerant condenses, becomes a high-pressure liquid refrigerant, flows through the indoor-unit pressure reducing device 213, and flows out from the indoor unit 210.

As when the cooling operation is performed, when the heating operation is performed only at the indoor unit 200, the indoor-unit pressure reducing device 213 is closed, and the refrigerant is not supplied to the indoor heat exchanger 211 of the indoor unit 210. In contrast, when the heating operation is performed only at the indoor unit 210, the indoor-unit pressure reducing device 203 is closed, and the refrigerant is not supplied to the indoor heat exchanger 201 of the indoor unit 200.

The high-pressure liquid refrigerant that has flown out from the indoor units 200 and 210 flows through the liquid pipe 50 and returns to the outdoor unit 100. The high-pressure liquid refrigerant that has flown into the outdoor unit 100 is reduced in pressure by the outdoor unit pressure reducing device 117, has its state changed to a gas-liquid two-phase state, and flows into the outdoor heat exchanger 130 and the engine exhaust-heat heat exchanger 118. At the outdoor heat exchanger 130, the refrigerant in the gas-liquid two-phase state is subjected to heat exchange with outside air, whereas, at the engine exhaust-heat heat exchanger 118, the refrigerant in the gas-liquid two-phase state is subjected to heat exchange with high-temperature cooling water used for cooling the engine 111. Then, it absorbs heat and then evaporates, flows through the four-way valve 116 and the accumulator 114, and returns to the engine driving compressor 112 and the power-supply driving compressor 113.

A method for operating the engine driving compressor 112 and the power-supply driving compressor 113 during the heating operation is, for example, as follows.

When a heating load is less than a heating capacity when the engine driving compressor 112 is operated at the minimum operation frequency (minimum heating capacity of the engine driving compressor 112), only the engine driving compressor 112 is intermittently operated. Therefore, only the power-supply driving compressor 113 is operated.

When the heating load is greater than a minimum heating load of the engine driving compressor 112 and is less than a heating capacity when the engine driving compressor 112 and the power-supply driving compressor 113 are both operated at the minimum operation frequency (minimum heating capacity when both of the compressors are operated), either one of the engine driving compressor 112 and the power-supply driving compressor 113, such as the compressor whose operation costs or energy consumption is lower, is selected and operated.

When the heating load is greater than the minimum heating capacity when both of the compressors are operated, the engine driving compressor 112 and the power-supply driving compressor 113 are both operated so that, for example, operation costs or energy consumption is minimized.

In this case, in order to determine the operation frequency of each of the power-supply driving compressor 113 and the engine driving compressor 112 for minimizing the operation costs or the energy consumption, the relationship between the operation costs and the operation frequency of each compressor or the relationship between the energy consumption and the operation frequency of each compressor is utilized.

Actually, the proportion of the heating load of the engine driving compressor 112 with respect to the entire heating load is on the order of ±15% of the proportion of a heating capacity when only the engine driving compressor 112 is operated at the maximum operation frequency with respect to a maximum heating capacity when both of the compressors are operated at the maximum operation frequency (maximum heating capacity when both of the compressors are operated).

However, during the heating operation, the frosting state of the outdoor heat exchanger 130 is monitored at all times. When there is a possibility of frost formation, even if the operation frequency of each compressor is set so as to minimize the operation costs or energy consumption, control is performed so as to increase the operation frequency of the engine driving compressor 112 and reduce the operation frequency of the power-supply driving compressor 113.

When the operation frequency of the engine driving compressor 112 is increased, the amount of exhaust heat of the engine 111 is increased, and the amount of heat of the cooling water that is supplied to the engine exhaust-heat heat exchanger 118 is also increased. That is, the engine exhaust-heat heat exchanger 118 makes it possible to evaporate a larger amount of refrigerant, reduce the amount of refrigerant flowing through the outdoor heat exchanger 130, and, thus, reduce the possibility of frost formation.

As is clear from the description above, in the exemplary embodiment, the power-supply driving compressor 113 is provided in the heat exchanger room 102 of the outdoor unit of the existing gas heat pump. Therefore, the layout of the components of the machine room 101 at the outdoor unit is the same as the layout of the components of the machine room at the outdoor unit of the existing gas heat pump. Consequently, it is possible to use as they are, for example, power-supply/signal lines that connect a control board and various actuators of, for example, an electromagnetic valve, an expansion valve, a non-power-supply driving compressor, a gas engine, and a refrigerant pipe component of the existing gas heat pump. Thus, it is possible to reduce development period and manufacturing costs.

In the exemplary embodiment, the power-supply driving compressor 113 is provided at the substantially central portion of the heat exchanger room 102. Therefore, a change in a horizontal-direction center-of-gravity position of the outdoor unit of the existing gas heat pump due to the addition of the power-supply driving compressor 113 is small.

Consequently, the outdoor unit can be transported with substantially the same weight balance as the existing gas heat pump, so that it is possible to prevent a contractor that sets the outdoor unit from being excessively burdened when transporting the outdoor unit.

In the exemplary embodiment, the inside diameter of each of the discharge pipe and the suction pipe at the engine driving compressor 112 is larger than the inside diameter of the discharge pipe and the suction pipe at the power-supply driving compressor 113.

Therefore, it is possible to reduce an increase in pressure loss at each of the discharge pipe and the suction pipe at the engine driving compressor 112 and to prevent a reduction in operation efficiency of the outdoor unit as a whole. In addition, the amount of refrigeration oil returning to the engine driving compressor 112 from the refrigeration cycle is larger than the amount of refrigeration oil returning to the power-supply driving compressor 113. Therefore, the reliability of the operation of the engine driving compressor 112 can be increased.

### Second Exemplary Embodiment

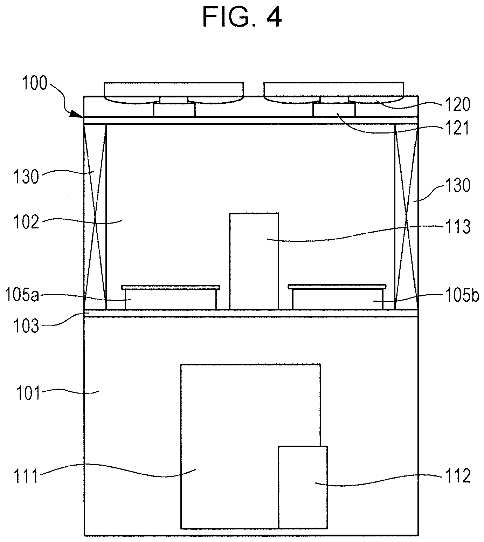

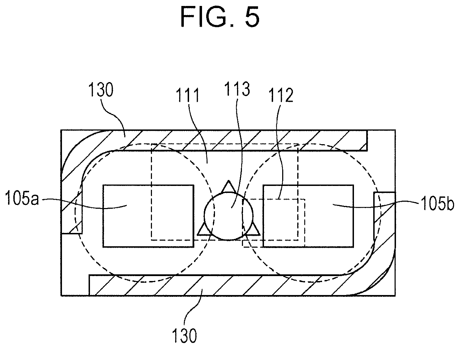

An internal structure of an outdoor unit 100 of an air conditioner according to a second exemplary embodiment is shown in Figs. 4 and 5. Fig. 4 is a vertical sectional view of the outdoor unit 100 that is sectioned by a vertical plane that is parallel to a front plane. Fig. 5 is a horizontal sectional view of the outdoor unit 100 that is sectioned by a horizontal plane that is parallel to a bottom plane.

In Figs. 4 and 5, reference numerals 105a and 105b denote vent holes that are provided in a partition plate 103 in the outdoor unit 100.

The vent holes 105a and 105b are substantially symmetrically disposed with respect to a straight line that divides the partition plate 103 in a width direction (that is, a side direction in Fig. 5). Air in the outdoor unit can move between a machine room 101 and a heat exchanger room 102 via the vent holes 105a and 105b. Opening adjusting valves (not shown) are provided at the vent holes 105a and 105b. Therefore, the openings of the vent holes 105a and 105b are adjustable.

A power-supply driving compressor 113 is disposed between the vent holes 105a and 105b and at a substantially central portion in a depth direction. The other structural features are the same as those of the first exemplary embodiment, and are, therefore, not described.

The operations of the outdoor unit 100 during cooling and heating operations are the same as those in the first exemplary embodiment. Here, the operations at the vent holes 105a and 105b during the cooling operation and the heating operation are described.

When an engine 111 and an engine driving compressor 112 are operating, since fuel, such as gas, is burnt in the engine 111, high-temperature exhaust heat is generated. The engine 111 is cooled by cooling water that is circulated by a cooling-water pump (not shown) that is provided at the machine room 101.

The cooling water that has become hot due to the exhaust heat from the engine 111 dissipates its heat at a radiator (not shown) that is provided at the heat exchanger room 102. Then, the cooling water is returned to the engine 111. In the heat exchanger room 102, the radiator is provided at an inner side of an outdoor heat exchanger 130, and is formed so as to perform heat exchange with air that has been subjected to heat exchange with the refrigerant at the outdoor heat exchanger 130.

The exhaust heat from the engine 111 cannot be completely removed by the cooling water alone. Therefore, with the opening adjusting valves (not shown) at the vent holes 105a and 105b being open, an outdoor blower fan 120 is operated to allow air in the machine room 101 to escape to the heat exchanger room 102, to prevent the machine room 101 from becoming heated to a high temperature due to the exhaust heat from the engine 111.

In contrast, when the engine 111 and the engine driving compressor 112 are not operated, that is, when only the power-supply driving compressor 113 is operated, since exhaust heat from the engine 111 is not generated, the opening adjusting valves (not shown) at the vent holes 105a and 105b are closed. This does not allow air to move from the machine room 101 to the heat exchanger room 102. Therefore, compared to the case in which the vent holes 105a and 105b are open, the airflow through the heat exchanger is increased, so that the efficiency of the entire refrigeration cycle is increased. For cooling a control board (not shown) that is mounted at the machine room 101, control may be performed so that the vent holes 105a and 105b are partly open.

As is clear from the description above, in the exemplary embodiment, the vent holes 105a and 105b are substantially symmetrically disposed with respect to the straight line that divides the partition plate 103 in two in the width direction (that is, the side direction in Fig. 5), and the power-supply driving compressor 113 is disposed between these vent holes 105a and 105b. Therefore, the power-supply driving compressor 113 is provided at a substantially central portion of a floor surface of the heat exchanger room (second floor). Consequently, in addition to providing the advantages of the first exemplary embodiment, it is possible to provide a ventilation path for discharging exhaust heat of the gas engine in the machine room (first floor) to the outside of a body housing via the heat exchanger room.

When the engine 111 and the engine driving compressor 112 are not operated, that is, when only the power-supply driving compressor 113 is operated, the opening adjusting valves (not shown) at the vent holes 105a and 105b are closed to prevent movement of air to the heat exchanger room 102 from the machine room 101. Therefore, it is possible to increase the airflow through the heat exchanger and increase the efficiency of the refrigeration cycle.

### Third Exemplary Embodiment

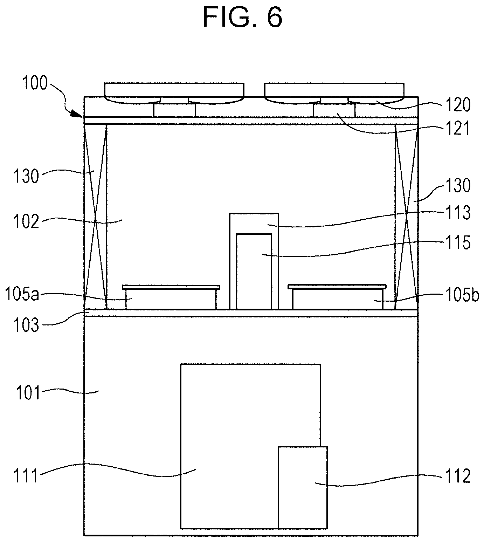

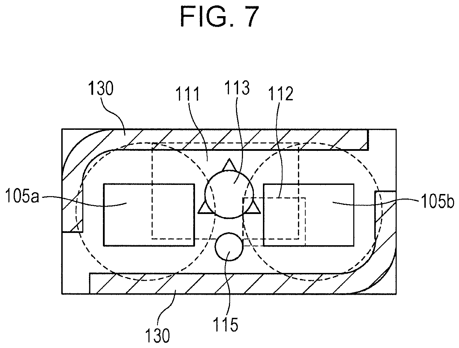

An internal structure of an outdoor unit 100 of an air conditioner according to a third exemplary embodiment is shown in Figs. 6 and 7. Fig. 6 is a vertical sectional view of the outdoor unit 100 that is sectioned by a vertical plane that is parallel to a front plane. Fig. 7 is a horizontal sectional view of the outdoor unit 100 that is sectioned by a horizontal plane that is parallel to a bottom plane.

In Figs. 6 and 7, an oil separator 115 is provided above a partition plate 103 in the outdoor unit 100. The oil separator 115 is connected to a point where a discharge tube of an engine driving compressor 112 and a discharge tube of a power-supply driving compressor 113 meet (refer to Fig. 1). A flow path resistance of an oil return tube 115a (refer to Fig. 2), connected to a suction pipe at the engine driving compressor 112 from the oil separator 115, is set so as to be smaller than a flow path resistance of an oil return tube 115c (refer to Fig. 2), connected to a suction pipe at the power-supply driving compressor 113 from the oil separator 115.

The settings of the flow path resistances are adjusted on the basis of, for example, the inside diameters and lengths of capillary tubes at the oil return tubes 115a and 115c.

The other structural features are the same as those of the first exemplary embodiment, and are, therefore, not described.

The operations of the outdoor unit 100 during cooling and heating operations are the same as those in the first and second exemplary embodiments. Here, an operation for returning oil from the oil separator 115 that is operating to the engine driving compressor 112 and the power-supply driving compressor 113 is described.

By opening an oil-return-tube on-off valve 115b (refer to Fig. 2) when the engine driving compressor 112 is being driven, refrigeration oils separated by the oil separator 115 are returned to the suction pipe at the engine driving compressor 112.

By similarly opening an oil-return-tube on-off valve 115d (refer to Fig. 2) when the power-supply driving compressor 113 is being driven, the refrigeration oils separated by the oil separator 115 are returned to the suction pipe at the power-supply driving compressor 113. When the engine driving compressor 112 is not driven, the oil-return-tube on-off valve 115b is closed. When the power-supply driving compressor 113 is not driven, the oil-return-tube on-off valve 115d is closed.

When the engine driving compressor 112 and the power-supply driving compressor 113 are operating at the same time, the oil separator 115 separates refrigeration oils contained in discharge gases of both compressors all at once. Since the displacement of the engine driving compressor 112 is greater than the displacement of the power-supply driving compressor 113, the flow amount of a refrigerant that the engine driving compressor 112 discharges is larger than the flow amount of a refrigerant that the power-supply driving compressor 113 discharges. Therefore, the amount of refrigeration oil that the engine driving compressor 112 discharges is larger than the amount of refrigeration oil that the power-supply driving compressor 113 discharges.

In the third exemplary embodiment, the flow path resistance of the oil-return tube 115a (refer to Fig. 2) is smaller than the flow path resistance of the oil-return tube 115c (refer to Fig. 2). Therefore, even if both compressors are operating at the same time, the amount of refrigeration oil that returns to the engine driving compressor 112 from the oil separator 115 is larger than the amount of refrigeration oil that returns to the power-supply driving compressor 113 from the oil separator 115.

The oil separator 115 is disposed above the partition plate 103 in the outdoor unit 100. There is a large head difference between the oil level of the refrigeration oil in the oil separator 115 and the oil level of the refrigeration oil that exists in the engine driving compressor 112. In contrast, there is a small head difference between the oil level of the refrigeration oil in the oil separator 115 and the oil level of the refrigeration oil that exists in the power-supply driving compressor 113. Therefore, when, for example, a low load is applied, even if the difference between high pressure and low pressure of a refrigeration cycle is small, the head differences allow the refrigeration oil to more easily return to the engine driving compressor 112 from the oil separator 115 than to the power-supply driving compressor 113 from the oil separator 115.

As is clear from the description above, since the flow path resistance of the oil return tube 115a, connected to the suction pipe at the engine driving compressor 112 from the oil separator 115, is set so as to be smaller than the flow path resistance of the oil return tube 115c, connected to the suction pipe at the power-supply driving compressor 113 from the oil separator 115, even if both compressors are operating at the same time, the amount of refrigeration oil that returns to the engine driving compressor 112 from the oil separator 115 is larger than the amount of refrigeration oil that returns to the power-supply driving compressor 113 from the oil separator 115. Therefore, it is possible to increase the reliability of the operation of the engine driving compressor 112 whose refrigeration oil discharge amount is large.

Since the oil separator 115 is provided above the partition plate 103 in the outdoor unit 100, even if the difference between the high pressure and the low pressure of the refrigeration cycle is small, such as when a low load is applied, the refrigeration oil tends to return to the engine driving compressor 112 from the oil separator 115. Therefore, it is possible to further increase the reliability of the operation of the engine driving compressor 112 whose refrigeration oil discharge amount is large.

The present disclosure makes it possible to provide an air conditioner whose operation costs or energy consumption is reduced and which can be suitably used.

## Claims

1. An outdoor unit (100) of an air conditioner, comprising:
a power-supply driving compressor (113) and a non-power-supply driving compressor (112) that are connected in parallel, the power-supply driving compressor (113) being driven by an electric power, the non-power-supply driving compressor (112) being driven by a driving source other than the electric power; and
a body housing (100A) divided into an upper portion and a lower portion by a partition plate (103),
**characterized in that**
a heat exchanger room (102) is provided at the upper portion,
a machine room (101) is provided at the lower potion,
the power-supply driving compressor (113) is provided at the heat exchanger room (102), and
the non-power-supply driving compressor (112) is provided at the machine room (101).

2. The outdoor unit (100) of an air conditioner according to claim 1, wherein the power-supply driving compressor (113) is provided at a substantially central portion of a floor surface of the heat exchanger room (102).

3. The outdoor unit (100) of an air conditioner according to claim 1, wherein at least one vent hole (105a, 105b) is provided in the partition plate (103) around the power-supply driving compressor (113), the vent hole (105a, 105b) allowing air in the outdoor unit (100) to move between the heat exchanger room (102) and the machine room (101).

4. The outdoor unit (100) of an air conditioner according to claim 3, wherein a ventilation resistance of the vent hole (105a, 105b) during the non-operation of the non-power-supply driving compressor (112) is larger than a ventilation resistance of the vent hole (105a, 105b) during the operation of the non-power-supply driving compressor (112).

5. The outdoor unit (100) of an air conditioner according to claim 1, further comprising:
a non-power-supply-driving-compressor oil separator (115) that separates refrigeration oil from a refrigerant discharged by the non-power-supply driving compressor (112), and
a power-supply-driving-compressor oil separator (115) that separates refrigeration oil from a refrigerant discharged by the power-supply driving compressor (113),
wherein a flow path resistance of a pipe (115a) that allows the refrigeration oil to flow from the non-power-supply-driving-compressor oil separator (115) to the non-power-supply driving compressor (112) is smaller than a flow path resistance of a pipe (115c) that allows the refrigeration oil to flow from the power-supply-driving-compressor oil separator (115) to the power-supply driving compressor(113).

6. The outdoor unit (100) of an air conditioner according to claim 5, wherein the non-power-supply-driving-compressor oil separator (115) is provided at the heat exchanger room (102).

7. The outdoor unit (100) of an air conditioner according to claim 5, wherein the refrigeration oil of the power-supply driving compressor (113) and the refrigeration oil of the non-power-supply driving compressor (112) are the same.

8. The outdoor unit (100) of an air conditioner according to claim 1, wherein an displacement of the non-power-supply driving compressor (112) is larger than an displacement of the power-supply driving compressor (113).

9. The outdoor unit (100) of an air conditioner according to claim 1, wherein an inside diameter of each of a discharge pipe and a suction pipe included in the non-power-supply driving compressor (112) is larger than an inside diameter of each of a discharge pipe and a suction pipe included in the power-supply driving compressor (113).

## Patentansprüche

1. Außeneinheit (100) einer Klimaanlage, umfassend:
einen stromangetriebenen Kompressor (113) und einen nicht stromangetriebenen Kompressor (112), die parallelgeschaltet sind, wobei der stromangetriebene Kompressor (113) durch eine elektrische Leistung angetrieben wird, wobei der nicht stromangetriebene Kompressor (112) durch eine andere Antriebsquelle als die elektrische Leistung angetrieben wird; und
ein Körpergehäuse (100A), das durch eine Trennwand (103) in einen oberen Abschnitt und einen unteren Abschnitt unterteilt ist,
**dadurch gekennzeichnet, dass**
ein Wärmetauscher-Raum (102) am oberen Abschnitt vorgesehen ist,
ein Maschinenraum (101) am unteren Abschnitt vorgesehen ist,
der stromangetriebene Kompressor (113) am Wärmetauscher-Raum (102) vorgesehen ist, und
der nicht stromangetriebene Kompressor (112) am Maschinenraum (101) vorgesehen ist.

2. Außeneinheit (100) einer Klimaanlage nach Anspruch 1, wobei der stromangetriebene Kompressor (113) an einem im Wesentlichen mittleren Abschnitt einer Bodenfläche des Wärmetauscher-Raums (102) vorgesehen ist.

3. Außeneinheit (100) einer Klimaanlage nach Anspruch 1, wobei in der Trennwand (103) mindestens ein Lüftungsloch (105a, 105b) um den stromangetriebenen Kompressor (113) herum vorgesehen ist, wobei das Lüftungsloch (105a, 105b) Luft in der Außeneinheit (100) zwischen dem Wärmetauscher-Raum (102) und dem Maschinenraum (101) bewegt.

4. Außeneinheit (100) einer Klimaanlage nach Anspruch 3, wobei ein Lüftungswiderstand des Lüftungslochs (105a, 105b) während des Nichtbetriebs des nicht stromangetriebenen Kompressors (112) größer ist als ein Lüftungswiderstand des Lüftungslochs (105a, 105b) während des Betriebs des nicht stromangetriebenen Kompressors (112).

5. Außeneinheit (100) einer Klimaanlage nach Anspruch 1, ferner umfassend:
einen Ölabscheider (115) für den nicht stromangetriebenen Kompressor, der Kühl-Öl von einem Kältemittel trennt, das von dem nicht stromangetriebenen Kompressor (112) abgegeben wird, und
einen Ölabscheider (115) für den stromangetriebenen Kompressor, der Kühl-Öl von einem Kältemittel trennt, das von dem stromangetriebenen Kompressor (113) abgegeben wird,
wobei ein Strömungswegwiderstand eines Rohres (115a), der es dem Kühl-Öl ermöglicht, vom Ölabscheider (115) für den nicht stromangetriebenen Kompressor zum nicht stromangetriebenen Kompressor (112) zu strömen, kleiner ist als ein Strömungswegwiderstand eines Rohres (115c), das es dem Kühl-Öl ermöglicht, vom Ölabscheider (115) für den stromangetriebenen Kompressor zum stromangetriebenen Kompressor (113) zu strömen.

6. Außeneinheit (100) einer Klimaanlage nach Anspruch 5, wobei der Ölabscheider (115) für den nicht stromangetriebenen Kompressor am Wärmetauscher-Raum (102) vorgesehen ist.

7. Außeneinheit (100) einer Klimaanlage nach Anspruch 5, wobei das Kühl-Öl des stromangetriebenen Kompressors (113) und das Kühl-Öl des nicht stromangetriebenen Kompressors (112) gleich sind.

8. Außeneinheit (100) einer Klimaanlage nach Anspruch 1, wobei eine Verdrängung des nicht stromangetriebenen Kompressors (112) größer ist als eine Verdrängung des stromangetriebenen Kompressors (113).

9. Außeneinheit (100) einer Klimaanlage nach Anspruch 1, wobei ein Innendurchmesser von sowohl einer Druckleitung als auch einer Saugleitung in dem nicht stromangetriebenen Kompressor (112) größer ist als ein Innendurchmesser von sowohl einer Druckleitung als auch einer Saugleitung in dem stromangetriebenen Kompressor (113).

## Revendications

1. Unité extérieure (100) pour climatiseur, comprenant:
un compresseur d'entraînement sur alimentation électrique (113) et un compresseur d'entraînement sans alimentation électrique (112) qui sont connectés en parallèle, le compresseur d'entraînement sur alimentation électrique (113) étant entraîné par un courant électrique, le compresseur d'entraînement sans alimentation électrique (112) étant entraîné par une source d'entraînement autre que le courant électrique; et
un boîtier de corps (100A) divisé en une partie supérieure et une partie inférieure par une plaque de séparation (103),
**caractérisé en ce que**
une salle d'échangeur thermique (102) est prévue à la partie supérieure, une salle des machines (101) est prévue à la partie inférieure,
le compresseur d'entraînement à alimentation électrique (113) est prévu dans la salle d'échangeur thermique (102), et
le compresseur d'entraînement sans alimentation électrique (112) est prévu dans la salle des machines (101).

2. Unité extérieure (100) pour climatiseur selon la revendication 1, dans laquelle le compresseur d'entraînement sur alimentation électrique (113) est prévu dans une partie sensiblement centrale d'une surface au sol de la salle d'échangeur thermique (102).

3. Unité extérieure (100) pour climatiseur selon la revendication 1, dans laquelle au moins un trou d'évent (105a, 105b) est prévu dans la plaque de séparation (103) autour du compresseur d'entraînement sur alimentation électrique (113), l'évent (105a, 105b) laissant passer l'air dans l'unité extérieure (100) pour circuler entre la salle d'échangeur thermique (102) et la salle des machines (101).

4. Unité extérieure (100) pour climatiseur selon la revendication 3, dans laquelle une résistance de ventilation de l'évent (105a, 105b) pendant le non-fonctionnement du compresseur d'entraînement sans alimentation (112) est supérieure à la résistance de ventilation de l'évent (105a, 105b) pendant le fonctionnement du compresseur d'entraînement sans alimentation électrique (112).

5. Unité extérieure (100) d'un climatiseur selon la revendication 1, comprenant en outre:
un séparateur d'huile (115) pour compresseur d'entraînement sans alimentation électrique qui sépare l'huile de réfrigération d'un réfrigérant déchargé par le compresseur d'entraînement sans alimentation électrique (112), et
un séparateur d'huile (115) pour compresseur d'entraînement sur alimentation électrique qui sépare l'huile de réfrigération d'un réfrigérant déchargé par le compresseur d'entraînement sur alimentation électrique (113),
dans laquelle la résistance du circuit d'écoulement d'un tuyau (115a) qui permet à l'huile de réfrigération de s'écouler du séparateur d'huile (115) pour compresseur d'entraînement sur alimentation électrique vers le compresseur d'entraînement sans alimentation électrique (112) est inférieure à une résistance du circuit d'écoulement d'un tuyau (115c) permettant à l'huile de réfrigération de s'écouler du séparateur d'huile (115) pour compresseur d'entraînement sur alimentation électrique jusqu'au compresseur d'entraînement sur alimentation électrique (113).

6. Unité extérieure (100) pour climatiseur selon la revendication 5, dans laquelle le séparateur d'huile (115) pour compresseur d'entraînement sans alimentation électrique est prévu dans au niveau de la salle d'échangeur thermique (102).

7. Unité extérieure (100) pour climatiseur selon la revendication 5, dans laquelle l'huile de réfrigération du compresseur d'entraînement sur alimentation électrique (113) et l'huile de réfrigération du compresseur d'entraînement sans alimentation électrique (112) sont les mêmes.

8. Unité extérieure (100) pour climatiseur selon la revendication 1, dans laquelle le déplacement du compresseur d'entraînement sans alimentation électrique (112) est supérieur à un déplacement du compresseur d'entraînement sur alimentation électrique (113).

9. Unité extérieure (100) pour climatiseur selon la revendication 1, dans laquelle un diamètre intérieur d'un tuyau de décharge et d'un tuyau d'aspiration inclus dans le compresseur d'entraînement sans alimentation électrique (112) est supérieur à un tuyau de décharge et d'un tuyau d'aspiration inclus dans le compresseur d'entraînement sur alimentation électrique (113).
